(19) Europäisches Patentamt
European Patent Office
Office européen des brevets

(11) EP 1 564 253 A1

(12) EUROPEAN PATENT APPLICATION

(43) Date of publication:
**17.08.2005 Bulletin 2005/33**

(51) Int Cl.[7]: **C08L 67/06**, C08L 31/04, C08K 5/3435, C08K 5/32

(21) Application number: **04075482.2**

(22) Date of filing: **17.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **DSM IP Assets B.V.**
**6411 TE Heerlen (NL)**

(72) Inventors:
- **Jansen, Johan Franz Gradus Antonius**
  **6165 AP Geleen (NL)**
- **Kraeger, Ivo Ronald**
  **3742 PJ Baarn (NL)**

(74) Representative: **Jacobs, Monique S.N.**
**DSM Intellectual Property,**
**P.O Box 9**
**6160 MA Geleen (NL)**

# (54) Unsaturated polyester resins or vinyl ester resin compositions

(57) The present invention relates to a method of providing unsaturated polyester resin or vinyl ester resin compositions containing a phenolic inhibitor and showing a reduced gel-time drift tendency, wherein first a primary resin composition containing a phenolic inhibitor is produced with the phenolic inhibitor being selected from the group of phenolic compounds of which the O-H bond dissociation enthalpy is in the range of from 78 to 91 kcal/mol, and wherein in a further step an N-oxyl radical compound is added to said primary unsaturated polyester resin or vinyl ester resin composition. In a preferred embodiment of the invention, in addition to the N-oxyl radical compound, also an amount of an amine compound is being added.

The present invention further also relates to objects and structural parts prepared from such unsaturated polyester or vinyl ester resin compositions. by curing. These can suitably be used in the field of chemical anchoring, construction, roofing, flooring, windmill blades, containers, tanks, pipes, automotive parts, boats, etc.



Printed by Jouve, 75001 PARIS (FR)

## Description

The present invention relates to a method of providing unsaturated polyester resin or vinyl ester resin compositions containing a phenolic inhibitor and showing a reduced gel-time drift tendency. The present invention further also relates to objects and structural parts prepared from such unsaturated polyester or vinyl ester resin compositions. As meant herein, objects and structural parts are considered to have a thickness of at least 0.5 mm and appropriate mechanical properties. The term "objects and structural parts" as meant herein also includes cured resin compositions as are used in the field of chemical anchoring, construction, roofing, flooring, windmill blades, containers, tanks, pipes, automotive parts, boats, etc.

As meant herein the term gel-time drift (for a specifically selected period of time, for instance 30 or 60 days) reflects the phenomenon, that - when curing is performed at another point of time than at the reference standard moment for curing 24 hours after preparation of the resin - the gel time observed is different from that at the point of reference. For unsaturated polyester resins and vinyl ester resins, as can generally be cured under the influence of peroxides, gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. The lower the gel-time drift is, the better predictable the behavior of the resin (and the resulting properties of the cured material) will be.

W. D. Cook *et al*. in Polym. Int. Vol.50, 2001, at pages 129-134 describe in an interesting article various aspects of control of gel time and exotherm behavior during cure of unsaturated polyester resins. They also demonstrate how the exotherm behavior during cure of such resins can be followed. Figures 2 and 3 of this article show the gel times in the bottom parts of the exotherms measured. Because these authors focus on the exotherms as a whole, they also introduced some correction of the exotherms for heat loss. As can be seen from the figures, however, such correction for heat loss is not relevant for gel times below 100 minutes.

Gel time drift (hereinafter: "Gtd") can be expressed in a formula as follows:

$$Gtd = (T_{25\text{-}35^\circ C\text{ at x-days}} - T_{25\text{-}35^\circ C\text{ at 1day}}) / T_{25\text{-}35^\circ C\text{ at 1day}} \times 100\% \qquad \text{(formula 1)}$$

In this formula $T_{25\rightarrow 35^\circ C}$ (which also might be represented by $T_{gel}$) represents, as mentioned above, the time lapsed in the curing phase of the resin to increase in temperature from 25 °C to 35 °C. The additional reference to "at x days" shows after how many days of preparing the resin the curing is effected.

All polyester resins, by their nature, undergo some changes over time from their production till their actual curing. One of the characteristics where such changes become visible is the gel-time drift. The state of the art unsaturated polyester or vinyl ester resin systems generally are being cured by means of initiation systems. In general, such unsaturated polyester or vinyl ester resin systems are cured under the influence of peroxides and are pre-accelerated by the presence of metal compounds, especially cobalt salts, tertiary amines and mercaptans as accelerators. Cobalt naphthenate and cobalt octanoate are the most widely used accelerators. In addition to accelerators, the polyester resins usually also contain inhibitors for ensuring that the resin systems do not gellify prematurely (i.e. that they have a good storage stability). Furthermore, inhibitors are being used to ensure that the resin systems have an appropriate gel time and/or for adjusting the gel-time value of the resin system to an even more suitable value. Phenolic inhibitors are commonly being used. Accordingly, unsaturated polyester resins and vinyl ester resins containing a phenolic inhibitor are well known in the state of the art resins.

An excellent review article of M. Malik *et al*. in J.M.S. - Rev. Macromol. Chem. Phys., C40(2&3), p.139-165 (2000) gives a good overview of the current status of these resin systems. Curing is addressed in chapter 9. Inhibition predominantly takes place in the induction phase of the curing process, where the inhibitor consumes free radicals, and very little polymerization takes place. Inhibition by phenolic inhibitors, for instance by hydroquinones, during resin preparation is addressed in chapter 3. For discussion of control of gel time reference can be made to the article of Cook *et al*. as has been mentioned above. Said article, however, does not present any hint as to the problems of gel-time drift as are being solved according to the present invention.

The phenomenon of gel-time drift, indeed, so far got quite little attention in the literature. Most attention so far has been given in literature to aspects of acceleration of gel time in general, and to improving of pot-life or shelf life of resins. The latter aspects, however, are not necessarily correlated to aspects of gel-time drift, and so, the literature until now gives very little suggestions as to possible solutions for improvement of (i.e. lowering of) gel-time drift. For instance, reference can be made to a paper presented by M. Belford et al., at the Fire Retardant Chemicals Association Spring Conference, March 10-13, 2002 where the gel-time reducing effect of a new antimony pentoxide dispersion (NYACOL APE 3040) has been addressed in fire retardant polyester resins promoted with cobalt.

Accordingly, for the unsaturated polyester resins and vinyl ester resins as are part of the current state of the art there is still need for finding resin systems showing reduced gel-time drift, or in other words, resin systems having only slight gel-time drift. Preferably the mechanical properties of the resin composition after curing are unaffected (or improved) as a result of the changes in the resin composition for achieving the reduced gel-time drift.

The present inventors now surprisingly found that unsaturated polyester resin or vinyl ester resin compositions containing a phenolic inhibitor and showing a reduced gel-time drift tendency could be obtained first producing a primary unsaturated polyester resin or vinyl ester resin composition containing a phenolic inhibitor with the phenolic inhibitor being selected from the group of phenolic compounds of which the O-H bond dissociation enthalpy is in the range of from 78 to 91 kcal/mol (i.e. of from about 326 to 381 kJ/mol), and by adding to said primary unsaturated polyester resin or vinyl ester resin composition an N-oxyl radical compound.

In particular, the N-oxyl radical compound is either an N-oxyl radical or a compound capable of forming a stable N-oxyl radical (-NO•) by dissociation of an - NO-E bond, wherein E represents a group selected from hydrogen, $C_{1-18}$ alkylene, $C_{5-18}$ cycloalkylene, $C_{1-4}$ alkylene substituted by phenyl which is itself optionally substituted by one or two $C_{1-4}$ alkyl, and wherein the bond dissociation enthalpy of said -NO-E bond, assuming E to be a hydrogen atom, is less than 73 kcal/mol (i.e. less than about 305 kJ/mol). 1 Kcal/mol equals 4,184 kJ/mol.

As meant herein, the O-H bond dissociation enthalpy (hereinafter also referred to as "BDE") for the phenolic inhibitor reflects the energy needed for breaking the O-H bond in the molecule. The BDE-value can be determined, for instance, by photoacoustic calorimetric methods as in general are being described by Laarhoven *et al*. in Acc. Chem. Res, 32 (1999), pages 342-349 and for phenolic hydrogen bonds by de Heer *et al*. in J. Org. Chem. 64 (1999), at pages 6969-6975. The bond dissociation enthalpy for the -NO-E bond in the N-oxyl radical compound, assuming E to be a hydrogen atom, can be determined in the same way.

Preferably, the O-H bond dissociation enthalpy of the phenolic inhibitor selected is in the range of from 79 to 84 kcal/mol (i.e. of from about 330 to 351 kJ/mol).

The phenolic inhibitor having an O-H bond dissociation enthalpy in the range of from 78 to 91 kcal/mol (preferably of from about 79 to 84 kcal/mol) is preferably present in the primary unsaturated polyester resin or vinyl ester resin composition in an amount of from about 0,01 to 60 mmol per kg of basic resin system.

For understanding of the invention, and for proper assessment of the amounts of phenolic inhibitor and of N-oxyl radical compound to be present in, respectively added to, the primary unsaturated polyester resin or vinyl ester resin composition in order to obtain the resin composition according to the invention, the term "basic resin system" is introduced here. As used herein, the term "basic resin system" is understood to mean the total weight of the resin, but excluding any fillers as may be used when applying the resin system for its intended uses. The basic resin system therefore consists of the unsaturated polyester resin or vinyl ester resin, any additives present therein (except for the peroxide component that is to be added shortly before the curing) for making it suitable for being cured, for instance all kinds of compounds soluble in the resin, such as initiators, accelerators, inhibitors (including the phenolic inhibitor as is to be present in the resin compositions of the invention, and including the N-oxyl radical compound), low-profile agents, colorants (dyes), thixotropic agents, release agents etc., as well as styrene and/or other solvents as may usually be present therein. The amount of additives soluble in the resin usually may be as from 1 to 25 wt.% of the basic resin system; the amount of styrene and/or other solvent may be as large as, for instance, up to 75 wt.% of the basic resin system. The basic resin system, however, explicitly does not include compounds not being soluble therein, such as fillers (e.g. glass or carbon fibers), talc, clay, solid pigments (such as, for instance, titanium dioxide (titanium white)), flame retardants, e.g. aluminium oxide hydrates, etc.

This amount of phenolic inhibitor as used in the context of the present invention, may, however, vary within rather wide ranges, and may be chosen as a first indication of the gel time as is desired to be achieved. Preferably, the amount of phenolic inhibitor is from about 0,2 to 35 mmol per kg of basic resin system, and more preferably it amounts to more than 0,5, most preferably more than 1 mmol per kg of basic resin system. The skilled man quite easily can assess, in dependence of the type of phenolic inhibitor selected, which amount thereof leads to good results according to the invention.

The type of phenolic inhibitor to be selected is most preferably chosen from the group of phenol, hydroquinones and catechols. Especially preferred are 1,2-dihydroxy substituted or 1,4-dihydroxy substituted aromatic compounds. The hydroquinones and catechols as used in the context of the present invention also may be applied in the form of their quinone precursors, which *in situ* will generate hydroquinones and catechols in the reaction system. For such precursors the respective BDE-values can be calculated as being the BDE-values for the hydroquinones and catechols themselves. The phenolic inhibitor selected most preferably is a 1,2-dihydroxy substituted aromatic compound, because in such case not only the gel-time drift is reduced most significantly, but also adjustment of the gel time itself is most appropriately achieved.

Suitably, the N-oxyl radical compound, is added to the resin system in an amount of at least 0.05 mmol per kg of basic resin system, more suitably it is added in an amount of at most 50 mmol. Preferably, the amount of this N-oxyl radical compound added is from about 0,2 to 20 mmol per kg of basic resin system, and more preferably it amounts

to more than 0, 5, most preferably more than 1 mmol per kg of basic resin system. Again, the skilled man quite easily can assess, in dependence of the type of phenolic inhibitor selected and of the type of N-oxyl radical compound added, which amount of the latter leads to good results according to the invention.

Even more preferred, the N-oxyl radical compound is added in a molar ratio (phenolic inhibitor vs. N-oxyl radical compound) in the range of from 30 : 1 to 1 : 2, preferably of from 20 : 1 to 1 : 1,5, more preferably of from 3 : 1 to 1 : 1, as compared to the molar amount of the phenolic inhibitor selected having an O-H bond dissociation enthalpy in the range of from 78 to 91 kcal/mol.

The unsaturated polyester resin or vinyl ester resin may be any such resin as is known to the skilled man. Examples thereof can be found in the aforementioned review article by M. Malik *et al*., who describe a classification of such resins - on the basis of their structure - in five groups: (1) ortho resins; (2) iso-resins; (3) bisphenol-A-fumarates; (4) chlorendics, and (5) vinyl ester resins. Besides these classes of resins also so-called dicyclopentadiene (DCPD) resins can be distinguished. More detailed examples thereof will be given below in some of the following paragraphs, as well as in the experimental part.

According to the invention a resin composition showing a reduced gel-time drift tendency is obtained by adding to a primary unsaturated polyester resin or vinyl ester resin composition containing containing a phenolic inhibitor selected from the group of phenolic compounds having an O-H bond dissociation enthalpy in the range of from 78 to 91 kcal/mol, an amount of N-oxyl radical or of a compound capable of forming a stable N-oxyl radical (-NO•) by dissociation of an -NO-E bond having a dissociation enthalpy of less than 73 kcal/mol if E would be a hydrogen atom. N-oxyl radicals and compounds capable of forming a stable N-oxyl radical (-NO•) by dissociation of an -NO-E bond having a dissociation enthalpy of less than 73 kcal/mol if E would be a hydrogen atom, hereinafter together are being referred to as N-oxyl radical compounds.

Suitable examples of phenolic inhibitors having an O-H bond dissociation enthalpy in the range of from 78 to 91 kcal/mol, as are to be selected according to the present invention, can be selected from the following group of compounds, for which the BDE-values, in kcal/mol, are indicated between brackets : bisphenol-A (BDE=85,7), 2-methoxyphenol (BDE= 87,4), 4-methoxyphenol (BDE= 83,2), 2,6-di-tertiary-butylphenol (BDE= 82,8), 2,4,6-trimethyl-phenol (BDE= 82,4), 2,6-di-tertiary-butyl-p-cresol (BDE= 81,1), 2,4,6-tris-dimethylaminomethyl phenol (BDE= 82,4), 4,4'-thiobis(3-methyl-6-tertiary-butylphenol) (BDE= 83,6), hydroquinone (BDE= 83,4), 2-methylhydroquinone (BDE= 82,9), 2-tertiary-butylhydroquinone (BDE= 81,7), 2,5-di-tertiary-butylhydroquinone (BDE= 81,1), 2,6-di-tertiary-butylhydroquinone (BDE= 78,6), 2,6-dimethylhydroquinone (BDE= 79,9), 2,3,5-trimethylhydroquinone (BDE= 79,4), catechol (BDE= 83), 4-tertiary-butylcatechol (BDE= 81,1), 4,6-di-tertiary-butylcatechol (DBE=79,4).

Suitable examples of N-oxyl radical compounds that can be used in the context of the present invention, generally can be represented by the general structural formula (I)

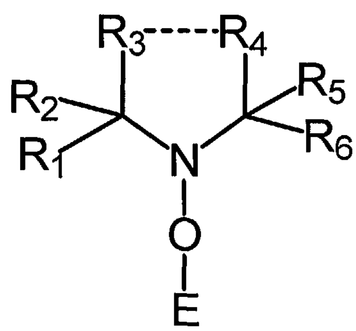

wherein E represents either a radical (·), a hydrogen atom, or a group selected from $C_{1-18}$ alkylene, $C_{5-18}$ cycloalkylene, $C_{1-4}$ alkylene substituted by phenyl which is itself optionally substituted by one or two $C_{1-4}$ alkyl, and wherein each of the groups $R_1$, $R_2$, $R_3$, $R_4$, $R_5$ and $R_6$ represent, independently, though with the proviso that only one of these groups may be a hydrogen atom, hydrogen or a $C_{1-8}$ linear or branched alkyl group, being optionally substituted by one or more groups like alcohols, ethers, esters, amines, amides, urethanes, urea, optionally substituted aromatic or heteroaromatic groups, isocyanates, isothiocyanates and the like, and wherein the groups $R_3$ and $R_4$ optionally be part of an N-heterocyclic 5- or 6-membered ring structure with the nitrogen shown in the formula.

Examples of N-oxyl radical compounds that suitably can be used in the present invention include, but are not limited to such compounds derived from piperidinyl or pyrrolidinyl groups, or from properly substituted hydroxylamines. Hereinafter they are being shown as the N-oxyl radicals themselves, but it will be evident that instead of the radical also an E-group may be present as defined above. Examples (of the radicals) are: 1-oxyl-2,2,6,6-tetramethylpiperidine,

1-oxyl-2,2,6,6-tetramethylpiperidine-4-ol (a compound also referred to as TEMPOL), 4-methoxy-2,2,6,6-tetramethylpiperidine-1-oxyl, bis(1-oxyl-2,2,6,6-tetramethylpiperidine-4-yl) succinate, bis(1-oxyl-2,2,6,6-tetramethylpiperidine-4-yl) adipate, bis(1-oxyl-2,2,6,6-tetramethylpiperidine-4-yl) phthalate, bis(1-oxyl-2,2,6,6-tetramethylpiperidine-4-yl) isophthalate, bis(1-oxyl-2,2,6,6-tetramethylpiperidine-4-yl) terephthalate, N,N'-bis(1-oxyl-2,2,6,6-tetramethylpiperidine-4-yl) adipamide, N-(1-oxyl-2,2,6,6-tetramethylpiperidine-4-yl) caprolactam, 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxy-2,2,5,5-tetramethyl-3-carboxylpyrrolidine (also called 3-carboxy-PROXYL), 1-oxy-2,2,5,5-tetramethyl-3-hydroxypyrrolidine, 1-oxy-2,2,5,5-tetramethyl-3-thioisocyanatopyrrolidine, 1-oxy-2,2,5,5-tetramethyl-3-(carboxy-N-hydroxysuccinimide ester)-pyrrolidine, N-tertiary-butyl-N-$\alpha,\alpha$-dimethyl benzyloxylamine, N-tertiary-butyl-N-$\alpha$-methyl-$\alpha$-benzyloxylamine, etc. or mixtures of such compounds.

According to the present invention, the amount of N-oxyl radical compound, as is to be added, thus may be chosen in a wide range. When higher molar amounts are added than are indicated above, this will generally not further influence the reduction of gel-time drift; when smaller amounts are added, then the effect on gel-time drift reduction becomes negligible. Usually already the lowest amounts indicated hereinabove are already found to be sufficient (i.e. effective) to achieve the intended reduced gel-time drift. As meant herein the term "effective" indicates that the effect of gel-time drift reduction caused by the amount of N-oxyl radical compound, i.e. not close to the limits of detectability of such effect.

It is to be noticed that in the prior art already resin compositions are known that - when the resin itself is being prepared - either contain a phenolic inhibitor, or one or more N-oxyl radical forming compounds. The combination of the first of these two embodiments (presence of a phenolic inhibitor during - primary - resin composition preparation), with adding of an amount of N-oxyl radical or of compound capable of forming a stable N-oxyl radical (-NO-) by dissociation after the - primary - resin preparation, but before curing thereof, as forms the subject of the present invention, however, is unobvious and has not been described nor suggested in the prior art. It results in a very favorable reduction of gel-time drift that is completely unexpected in view of the prior art.

For instance, reference can be made to EP-B-0761792 (as already has been cited above), which shows the effects of presence of an inhibitor chosen from the group of piperidinyl-N-oxyls (e.g. TEMPOL), or to EP-B-0924247. As to the latter one, it is to be noticed that example 6 of EP-B-0924247 shows the addition - before curing - of a phenolic inhibitor to a resin composition already containing an N-oxyl radical compound. According to said example, however no reduction of gel-time drift can be observed, although it is mentioned that the resin composition so obtained has a better shelf-life.

The present invention is, thus, completely unobvious over the prior art: good results in gel-time drift reduction are being achieved, as will be demonstrated in the experimental part. Moreover, the resin systems according to the present invention show good curing behavior. The unobviousness of the present invention can be demonstrated, as will be done in the experimental part, for a number of reasons. Only the unobvious addition, in the molar ratio as described herein, of an N-oxyl radical compound, after the preparation of a resin already containing a phenolic inhibitor as described herein, leads to the results according to the present invention.

Examples of suitable unsaturated polyester or vinyl ester resins to be used as basic resin systems in the resins of the present invention are, subdivided in the categories as classified by Malik et al., cited above.

(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A. Commonly the ones derived from 1,2-propylene glycol are used in combination with a reactive diluent such as styrene.
(2) Iso-resins: these are prepared from isophthalic acid, maleic anhydride or fumaric acid, and glycols. These resins may contain higher proportions of reactive diluent than the ortho resins.
(3) Bisphenol-A-fumarates: these are based on ethoxylated bisphenol-A and fumaric acid.
(4) Chlorendics: are resins prepared from chlorine/bromine containing anhydrides or phenols in the preparation of the UP resins.
(5) Vinyl ester resins: these are resins, which are mostly used because of their because of their hydrolytic resistance and excellent mechanical properties, as well as for their low styrene emission, are having unsaturated sites only in the terminal position, introduced by reaction of epoxy resins (e.g. diglycidyl ether of bisphenol-A, epoxies of the phenol-novolac type, or epoxies based on tetrabromobisphenol-A) with (meth)acrylic acid. Instead of (meth)acrylic acid also (meth)acrylamide may be used.

All of these resins, as can suitably used in the context of the present invention, may be modified according to methods known to the skilled man, e.g. for achieving lower acid number, hydroxyl number or anhydride number, or for becoming more flexible due to insertion of flexible units in the backbone, etc. The class of DCPD-resins is obtained

either by modification of any of the above resin types by Diels-Alder reaction with cyclopentadiene, or they are obtained alternatively by first reacting maleic acid with dicyclopentadiene, followed by the resin manufacture as shown above.

Of course, also other reactive groups curable by reaction with peroxides may be present in the resins, for instance reactive groups derived from itaconic acid, citraconic acid and allylic groups, etc. Accordingly, the - basic - unsaturated polyester resins used in the present invention may contain solvents. The solvents may be inert to the - basic - resin system or may be reactive therewith during the curing step. Reactive solvents are particularly preferred. Examples of suitable reactive solvents are styrene, α-methylstyrene, (meth) acrylates, N-vinylpyrrolidone and N-vinylcaprolactam. Preferably the - basic - unsaturated polyester resins contain at least 5 wt.% of a reactive solvent.

It will be clear that in the context of the present invention, the phenolic inhibitor selected for use in the resin system may be a single phenolic compound, or a mixture of phenolic compounds. Similarly, the N-oxyl radical compound, as is to be added, may be one single compound, or a mixture of such compounds.

As mentioned above, resins with excellently low gel-time drift are being obtained if an N-oxyl radical compound, as discussed hereinabove, is added to the - primary - resin composition. Preferably, the N-oxyl radical compound is a compound wherein the nitrogen of the N-O bond forms part of a 5- or 6-membered cyclic group. Most preferably, however, an N-oxyl radical is used as the N-oxyl radical compound to be added.

The unsaturated polyester resins and vinyl ester resins as are being used in the context of the present invention may be any type of such resins, but preferably are chosen from the group of DCPD-resins, iso-phthalic resins, orthophthalic resins and vinyl ester resins. More detailed examples of resins belonging to such groups of resins have been shown in the foregoing part of the specification.

These resins all can be cured by means of radical curing. Preferably such curing is being initiated with a peroxide. Of course, in addition to the peroxide accelerators can be applied. All peroxides known to the skilled man for being used in curing of unsaturated polyester resins and vinyl ester resins can be used. Such peroxides include organic and inorganic peroxides, whether solid or liquid; also hydrogen peroxide may be applied. Examples of suitable peroxides are, for instance, peroxy carbonates (of the formula -OC(O)O-), peroxyesters (of the formula -C(O)OO-), diacylperoxides (of the formula -C(O)OOC(O)-), dialkylperoxides (of the formula -OO-), etc. They can also be oligomeric or polymeric in nature. An extensive series of examples of suitable peroxides can be found, for instance, in US 2002/0091214-A1, paragraph [0018]. The skilled man can easily obtain information about the peroxides and the precautions to be taken in handling the peroxides in the instructions as given by the peroxide producers.

Preferably, the peroxide is chosen from the group of organic peroxides. Examples of suitable organic peroxides are: tertiary alkyl hydroperoxides (such as, for instance, t-butyl hydroperoxide), and other hydroperoxides (such as, for instance, cumene hydroperoxide), peroxyesters or peracids (such as, for instance, t-butyl peresters, benzoyl peroxide, peracetates and perbenzoates, lauryl peroxide, including (di)peroxyesters), perethers (such as, for instance, peroxy diethyl ether), perketones (such as, for instance, methyl ethyl ketone peroxide). Often the organic peroxides used as curing agent are tertiary peresters or tertiary hydroperoxides, i.e. peroxy compounds having tertiary carbon atoms directly united to a -O-O-acyl or - OOH group. Clearly also mixtures of these peroxides with other peroxides may be used in the context of the present invention. The peroxides may also be mixed peroxides, i.e. peroxides containing any two of different peroxygen-bearing moieties in one molecule). In case a solid peroxide is being used for the curing, the peroxide is preferably benzoyl peroxide (BPO).

Most preferably, however, the peroxide is a liquid peroxide. Handling of liquid peroxides when curing the resins for their final use is generally easier: they have better mixing properties and dissolve more quickly in the resin to be cured.

In particular it is preferred that the peroxide is selected from the group of perethers and perketones. The peroxide being most preferred in terms of handling properties and economics is methyl ethyl ketone peroxide (MEK peroxide).

In a particularly preferred embodiment of the present invention, not only a N-oxyl radical compound, as discussed hereinbefore, is being added to the resin mixture, but also a further amount of an amine compound is being added. The amine component added may be chosen from a broad range of primary, secondary and tertiary amines (generally $C_{1-24}$ amines, that may be aliphatic, linear or branched, or aromatic and/or otherwise cyclic, and optionally may be substituted with other functional groups). It is also noted that some amine compound already may be present during the preparation of the resin mixture, i.e. before the addition of the N-oxyl radical compound.

Suitable examples of tertiary amines that can be used in the context of the present invention are tertiary amines, for instance, triethylamine, 1,4-diazobicyclo-[2.2.2]-octane (DABCO), N,N,N',N'-tetramethyl-1,4-butanediamine, N-ethyldicycohexylamine, 1-methylpiperidine, N,N-dimethylethanolamine, triethanolamine, trimethylene-bis (1-piperidine ethanol), dimethylaniline, dimethyltoluidine, 4-tertiary-butyl-N,N-dimethylaniline, 4-methoxy-dimethylaniline, diethylaniline, diethyltoluidine, N,N-diisopropylaniline, diisopropyltoluidine, dimethylolaniline, dimethyloltoluidine, N,N-diethanolaniline, N,N-diethanoltoluidine, N,N-diethanolaniline monomethylether, N,N-diethanolaniline dimethylether, N,N-diisopropanolaniline, N,N-diisopropanoltoluidine, N,N-diisopropanoltoluidine monomethyl ether, N,N-diisopropanoltoluidine dimethyl ether, N,N,N',N'-tetramethylbenzidine, 4,4'-methylene-bis(2,6-diisopropyl-N,N-dimethylaniline), 4,4'-vinylidene-bis(N,N-dimethylaniline), N,N-diglycidyl-4-glycidyloxyaniline, N,N-diglycidylaniline, 4-dimethylaminophenethyl alcohol, 4,4-methylene-bis(N,N-bis-glycidylaniline). Also ethoxylated or propoxylated anilines, respectively ethoxylated or propoxylated toluidines may suitably be used.

Preferably said amine compound is chosen from the group of tertiary amine compounds, more preferably of aromatic tertiary amine compounds, and most preferably is an aromatic tertiary amine having a β-hydroxy or a β-alkoxy (generally $C_{1-12}$) substituent. Suitable examples of aromatic tertiary amines, and of β-hydroxy- or β-alkoxy-substituted aromatic tertiary amines are shown in the above list of tertiary amines.

Best results as to the reduction of gel-time drift are being achieved if the amine compound is added in an amount of from 0,5 to 300 mmol per kg of basic resin, more preferably of from 2 to 200 mmol per kg of basic resin. In a specific further embodiment of the present invention, the amine compound is added in an amount of from 5 to 50 mmol per kg of basic resin. The advantages of these very preferred embodiments according to the invention are being demonstrated in the experimental part hereof. It will be clear to the skilled man, that the amount of amine to be added also will be dependent of the type of curing system used in combination with the resin composition. Generally when curing with hydroperoxides (in combination with cobalt accelerators) lower amounts of amine are required than when curing, for instance, with BPO + amine curing systems.

The unsaturated polyester resins and vinyl ester resins according to the present invention can be applied in all applications as are usual for such types of resins. In particular they can suitably used in closed mould applications, but they also can be applied in open mould applications. For closed mould applications it is especially important that the manufacturer of the closed mould products reliably can use the favorable (i.e. reduced) gel-time drift tendency of the resins according to the invention. End segments where the unsaturated polyester resins and vinyl ester resins according to the present invention can be applied are also marine applications, chemical anchoring, roofing, construction, relining, pipes & tanks, flooring, windmill blades, etc. That is to say, the resins according to the invention can be used in all known uses of unsaturated polyester resins and vinyl ester resins.

Preferably, the resin compositions according to the present invention are being provided from unsaturated polyester resins or vinyl ester resins also containing a reactive diluent. Examples of suitable reactive diluents for the resins are styrene, (meth)acrylates, and the like. Most preferred are resins containing styrene as the reactive diluent. The amount of styrene may be up to, for instance, 200 wt.% of the dry weight of the resin system.

It is especially preferred that the resin compositions according to the invention are being cured by means of a peroxide compound. The peroxides used in the curing may either be liquid or solid peroxides. Use of liquid peroxides is most preferred in the curing.

The present invention finally also relates to all such objects or structural parts as are being obtained when curing the unsaturated polyester or vinyl ester resin compositions according to the invention. These objects and structural parts have excellent mechanical properties.

The invention is now demonstrated by means of a series of examples and comparative examples. All examples are supportive of the scope of claims. The invention, however, is not restricted to the specific embodiments as shown in the examples.

<u>Experimental part</u>

Gel time ($Tgel_{25-35°C}$) and peak time ($Tpeak_{25-peak}$) were determined by exotherm measurements according to the method of DIN 16945 when curing the resin with the peroxides as indicated in the examples and comparative examples. The equipment used therefor was a Soform gel timer, with a Peakpro software package and National Instruments hardware; the waterbath and thermostat used were respectively Haake W26, and Haake DL30.

The gel-time drift (Gtd) was calculated on the basis of the gel times determined at differrnt dates of curing according to formula 1:

$$\text{Drift} = (T_{25\text{-}35°C \text{ at x-days}} - T_{25\text{-}35°C \text{ at 1day}}) / T_{25\text{-}35°C \text{ at 1day}} \times 100\% \qquad \text{(formula 1)}$$

<u>Example 1</u>

To 1000 g of Synolite 1777-X-4 (an unsaturated polyester resin commercially available from DSM Composite Resins, Schaffhausen, Switzerland) which contained 4,38 mmol/kg t-butyl catechol there was added 1,86 mmol/kg of 1-oxyl-2,2,6,6-tetramethylpiperidine-4-ol (TEMPOL). After stirring for 5 min the resin mixture was left overnight and a gel time of 50,8 min was recorded using Butanox M50 (3% MEK-peroxide (MEK = methylethylketone); Akzo Nobel, the Netherlands).
After 68 days of storage of the uncured resin, the curing was repeated. At that time, the gel time was found to be 44,3

min. This means, the gel-time drift was -13% after 68 days

Comparative example A

Example 1 was repeated except for the addition of TEMPOL. The gel time after leaving overnight was 31,2 min; the gel time after 68 days was 55,8 min. This corresponds to a gel-time drift of 78% after 68 days.

This clearly shows that the drift can be reduced dramatically according to the invention.

Example 2

Example 1 was repeated, however - for adjusting the gel time in a desired region (of 25-30 min) - now 2,83 mmol/kg t-butyl catechol and 1,67 mmol/kg TEMPOL was used.

The gel time after leaving overnight was 27,4 min; the gel time after 68 days was 28,8 min. Accordingly, the gel-time drift was 5% after 68 days.

This example shows that it is possible, by adjusting the amount of the phenolic inhibitor/ stable N-oxyl radical mixture, to tune the gel time without affecting the stability of the gel time.

Example 3

Example 1 was repeated, however - for adjusting the gel time in a desired region (of 45-50 min) - now 4,2 mmol/kg t-butyl catechol and 2,0 mmol/kg TEMPOL was used.

The gel time after leaving overnight was 48,2 min; the gel time after 173 days was 48,8 min; this corresponds to a gel-time drift of 1% after 173 days.

Comparative example B

Example 3 was repeated except for the addition of TEMPOL.

The gel time after leaving overnight was 29,7 min; the gel time after 173 days was 59,7 min; this corresponds to a gel-time drift of 101% after 173 days.

Example 3 and comparative example B show that a stable gel time can be reached according to the invention at least for 6 months.

Example 4

To 900 g Palatal P5-01 (an unsaturated polyester resin commercially available from DSM Composite Resins, Schaffhausen, Switzerland) there was added 100 g styrene, 2 g cobalt octanoate (10% Co in white spirit) and 0,4 g t-butyl catechol (2,4 mmol/kg). After stirring for 5 min, 1,9 g N,N-dihydroxyethyl-p-toluidine (12 mmol/kg) was added, followed by 3,9 g of a 10% TEMPOL solution in styrene (2,1 mmol/kg) and the mixture was stirred for another 5 min. After 1 night storage the resin was cured with 3% Butanox M50 yielding the following cure characteristics : Tgel = 6,6 min; T peak =16,7 min; peak max = 158°C.

The curing was repeated after 133 days yielding : Tgel =8,8 min; T peak =19,9 min; peak max = 156°C.

Accordingly, the resulting gel-time drift was 33% after 133 days.

Comparative example C

To 900 g Palatal P5-01 was added 100 g styrene, 2 g cobalt octanoate (10% Co in white spirit) and 0,4 g t-butyl catechol (2,4 mmol/kg). After 1 night storage the resin was cured with 3% Butanox M50 yielding the following cure characteristics : Tgel = 22,5 min; T peak = 33,3 min; peak max= 158°C.

The curing was repeated after 133 days yielding : Tgel = 77,7 min; T peak =92,4 min; peak max = 147°C.

Accordingly, the resulting gel-time drift was 245% after 133 days.

Example 5

To 900 g Palatal P5-01 was added 100 g styrene, 2 g cobalt octanoate (10% Co in white spirit) and 0,2 g t-butyl catechol (1,2 mmol/kg). After stiring for 5 min, 2,1 g N,N-dihydroxyethyl-p-toluidine (12 mmol/kg) was added, followed by 3,56 g of a 10% TEMPOL solution in styrene (2,1 mmol/kg) and the mixture was stirred for another 5 min. After 1 night storage the resin was cured with 3% Butanox M50 yielding the following cure characteristics : Tgel = 12,5 min; T peak = 20,2 min; peak max = 162°C.

The curing was repeated after 106 days yielding : Tgel = 13,9 min; T peak = 22 min; peak max = 154°C. Accordingly, the resulting gel-time drift was 11 % after 106 days.

Comparative example D

To 900 g Palatal P5-01 was added 100 g styrene, 2 g cobalt octanoate (10% Co in white spirit) and 0,2 g t-butyl catechol (1,2 mmol/kg). After 1 night storage the resin was cured with 3% Butanox M50 yielding the following cure characteristics : Tgel = 13,4 min; T peak = 22,8 min; peak max = 161 °C.
The curing was repeated after 106 days yielding : Tgel = 38,9 min; T peak = 50,2 min; peak max = 157°C. Accordingly, the resulting in gel-time drift was 190% after 106 days.

Example 6

A resin was formulated based on 900 g Palatal P4-01, 100 g styrene, 2 g of a 10% Co solution and 2 g of a 10 % t-butyl catechol solution in styrene (1,2 mmol/kg). After stirring for 5 min 1,72 g of a 10% TEMPOL solution in styrene (1 mmol/kg) was added followed by 1,8 g N,N-dihydroxyethyl p-toluidine (8 mmol/kg). After stirring for another 5 min, the mixture was left overnight and the following cure characteristics were recorded using 3% MEK peroxide for curing : Tgel = 13,0 min; T peak = 23,6 min; peak temp = 153°C.
After 106 days the curing was repeated, and the following values were observed:
Tgel = 12,9 min; T peak = 23,9 min; peak temp = 150°C.
This corresponds to a gel-time drift of 1%.

Comparative example E

A resin was formulated based on 900 g Palatal P4-01, 100 g styrene, 2 g of a 10% Co solution and 2 g of a 10 % t-butyl catechol solution in styrene 1,2 mmol/kg). After stirring for 5 min, 1,8 g N,N-dihydroxyethyl p-toluidine was added. After stirring for another 5 min, the mixture was left overnight and the following cure characteristics were recorded using 3% MEK peroxide : Tgel = 11,5 min; T peak = 22 min; peak temp = 151°C.
After 106 days the curing was repeated, resulting in : Tgel = 18,5min; T peak = 32,5 min; peak temp = 149°C.
In this case, the resulting gel-time drift was 69% after 106 days.

Comparative example F

A resin was formulated based on 900 g Palatal P4-01, 100 g styrene, 2 g of a 10% Co solution and 2 g of a 10 % t-butyl catechol solution in styrene (1,2 mmol/kg). After stirring for 5 min, the mixture was left overnight and the following cure characteristics were recorded using 3% MEK peroxide : Tgel = 13,1 min; T peak = 26,9 min; peak temp = 144°C.
After 106 days the curing was repeated, resulting in : Tgel = 32,1 min; T peak = 49,1 min; peak temp =145°C.
In this case the gel-time drift was 145% after 106 days.

Example 7

A resin was formulated based on 993 g Diacryl 101 (Cray Valley Products, France), and 2,1 g of a 10 % t-butyl catechol solution in styrene (1,3 mmol/kg). After stirring for 5 min 0,28 g of a 10% TEMPOL solution in styrene (0,16 mmol/kg) was added followed by 7 g N,N-dihydroxyethyl p-toluidine (31 mmol/kg). After stirring for another 5 min, the mixture was left overnight and the following cure characteristics were recorded using 2% Perkadox CH-50L (benzoyl peroxide; Akzo Nobel, the Netherlands) for curing :
Tgel = 5,5 min; T peak = 7,8 min; peak temp = 186°C.
After 80 days the curing was repeated, and the following values were observed:
Tgel = 5,6 min; T peak = 7,9 min; peak temp = 186°C.
This corresponds to a gel-time drift of 2%.

These examples demonstrate that a synergistic effect in gel-time drift reduction can be achieved by the combined addition of an N-oxyl radical compound and an amine, for different resin systems and different peroxides.

## Claims

1. Method of providing an unsaturated polyester resin or vinyl ester resin composition containing a phenolic inhibitor

and showing a reduced gel-time drift tendency, **characterized in that** first a primary unsaturated polyester resin or vinyl ester resin composition containing a phenolic inhibitor is produced with the phenolic inhibitor being selected from the group of phenolic compounds of which the O-H bond dissociation enthalpy is in the range of from 78 to 91 kcal/mol (i.e. of from about 326 to 381 kJ/mol), and **in that** an N-oxyl radical compound is added to said primary unsaturated polyester resin or vinyl ester resin composition.

**2.** Method according to claim 1, **characterized in that**
the N-oxyl radical compound is either an N-oxyl radical or a compound capable of forming a stable N-oxyl radical (-NO-) by dissociation of an -NO-E bond, wherein E represents a group selected from hydrogen, $C_{1-18}$ alkylene, $C_{5-18}$ cycloalkylene, $C_{1-4}$ alkylene substituted by phenyl which is itself optionally substituted by one or two $C_{1-4}$ alkyl, and wherein the dissociation enthalpy of said -NO-E bond, assuming E to be a hydrogen atom, is less than 73 kcal/mol (i.e. less than about 305 kJ/mol).

**3.** Method according to any of claims 1 or 2, **characterized in that**
the O-H bond dissociation enthalpy of the phenolic inhibitor selected is in the range of from 79 to 84 kcal/mol (i.e. of from about 330 to 351 kJ/mol).

**4.** Method according to any of claims 1 to 3, **characterized in that**
the phenolic inhibitor is present in the primary resin composition in an amount of from about 0,01 to 60 mmol per kg of basic resin system.

**5.** Method according to any of claims 1 to 4, **characterized in that**
the amount of phenolic inhibitor is from about 0,2 to 35 mmol per kg of basic resin system.

**6.** Method according to any of claims 1 to 5, **characterized in that**
the phenolic inhibitor selected is chosen from the group of phenol, hydroquinones and catechols.

**7.** Method according to claim 6, **characterized in that**
the phenolic inhibitor selected is a 1,2-dihydroxy substituted aromatic compound.

**8.** Method according to any of claims 1 to 7, **characterized in that**
the N-oxyl radical compound is added to the primary resin composition in an amount of at least 0.05 mmol per kg of basic resin system, more preferably in an amount of at most 50 mmol per kg of basic resin system, most preferably in an amount of from about 0,2 to 20 mmol per kg of basic resin system, especially in an amount of more than 1 mmol per kg of basic resin system.

**9.** Method according to any of claims 1 to 8, **characterized in that**
the molar ratio (phenolic inhibitor vs. N-oxyl radical compound) is in the range of from 30 : 1 to 1 : 2, preferably of from 20 : 1 to 1 : 1,5, more preferably of from 3 : 1 to 1 : 1.

**10.** Method according to any of claims 1 to 9, **characterized in that**
the N-oxyl radical compound is a compound wherein the nitrogen of the N-O bond forms part of a 5- or 6-membered cyclic group.

**11.** Method according to any of claims 1 to 10, **characterized in that**
an N-oxyl radical is used as the N-oxyl radical compound to be added.

**12.** Method according to any of claims 1 to 11, **characterized in that**
in addition to the N-oxyl radical compound also an amount of an amine compound is being added.

**13.** Method according to claim 12, **characterized in that** said amine compound is chosen from the group of tertiary amine compounds, more preferably of aromatic tertiary amine compounds.

**14.** Method according to claim 13, **characterized in that** the amine compound is an aromatic tertiary amine having a β-hydroxy or a β-alkoxy substituent.

**15.** Method according to any of claims 12 to 14, **characterized in that**
the amine compound is added in an amount of from 0,5 to 300 mmol per kg of basic resin, more preferably of from

2 to 200 mmol per kg of basic resin.

**16.** Method for providing resin compositions according to any of claims 1-15, **characterized in that** the resin compositions are being provided from unsaturated polyester resins or vinyl ester resins also containing a reactive diluent.

**17.** Method according to claim 16, **characterized in that** the reactive diluent is styrene.

**18.** Method according to any of claims 1-17, **characterized in that** the resin compositions can be cured by means of a peroxide compound.

**19.** Method according to claim 18, **characterized in that** the peroxide used is a liquid peroxides.

**20.** Objects or structural parts as are being obtained when curing the unsaturated polyester or vinyl ester resin compositions provided according to any of claims 1-19.

European Patent Office

# EUROPEAN SEARCH REPORT

Application Number
EP 04 07 5482

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | EP 0 924 247 A (NIPPON CATALYTIC CHEM IND) 23 June 1999 (1999-06-23)<br>* page 3, line 9 - page 5, line 20 *<br>* abstract; claims 1-5; examples 1-12 * | 1-20 | C08L67/06<br>C08L31/04<br>C08K5/3435<br>C08K5/32 |
| X | US 2003/197151 A1 (GUGUMUS FRANCOIS) 23 October 2003 (2003-10-23)<br>* paragraph [0003] - paragraph [0026] *<br>* paragraph [0028] - paragraph [0084] *<br>* abstract; claims 1-17; examples 1,2 * | 1-20 | |
| X | US 2003/189192 A1 (BROUSSARD FABJO ET AL) 9 October 2003 (2003-10-09)<br>* paragraph [0010] - paragraph [0014] *<br>* paragraph [0208] - paragraph [0278] *<br>* abstract; claims 1-23; examples 1-3 * | 1-20 | |
| D,X | US 5 854 305 A (MOENCH MONIKA ET AL) 29 December 1998 (1998-12-29)<br>* column 2, line 29 - column 4, line 9 *<br>* abstract; claims 1-10; examples 1-4 * | 1-20 | |

TECHNICAL FIELDS SEARCHED (Int.Cl.7)
C08L
C08K

The present search report has been drawn up for all claims

1

| Place of search | Date of completion of the search | Examiner |
|---|---|---|
| Munich | 13 May 2004 | Glomm, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 07 5482

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2004

| Patent document cited in search report | Publication date | Patent family member(s) | Publication date |
|---|---|---|---|
| EP 0924247 A | 23-06-1999 | EP 0924247 A1 | 23-06-1999 |
| | | DE 69720005 D1 | 24-04-2003 |
| | | DE 69720005 T2 | 04-12-2003 |
| US 2003197151 A1 | 23-10-2003 | AU 6231101 A | 11-12-2001 |
| | | AU 6601001 A | 11-12-2001 |
| | | AU 7634101 A | 11-12-2001 |
| | | BE 1014206 A3 | 03-06-2003 |
| | | BE 1014207 A3 | 03-06-2003 |
| | | BR 0111216 A | 01-04-2003 |
| | | BR 0111240 A | 10-06-2003 |
| | | BR 0111290 A | 10-06-2003 |
| | | CA 2406951 A1 | 06-12-2001 |
| | | CA 2408093 A1 | 06-12-2001 |
| | | CA 2408651 A1 | 06-12-2001 |
| | | CN 1432041 T | 23-07-2003 |
| | | CN 1432042 T | 23-07-2003 |
| | | CN 1437630 T | 20-08-2003 |
| | | DE 10196227 T0 | 17-04-2003 |
| | | DE 10196264 T0 | 15-05-2003 |
| | | DE 10196267 T0 | 15-05-2003 |
| | | WO 0192392 A2 | 06-12-2001 |
| | | WO 0192398 A2 | 06-12-2001 |
| | | WO 0192393 A2 | 06-12-2001 |
| | | ES 2199696 A1 | 16-02-2004 |
| | | ES 2201934 A1 | 16-03-2004 |
| | | FR 2809738 A1 | 07-12-2001 |
| | | FR 2809740 A1 | 07-12-2001 |
| | | FR 2809739 A1 | 07-12-2001 |
| | | GB 2378950 A ,B | 26-02-2003 |
| | | GB 2378951 A ,B | 26-02-2003 |
| | | GB 2378952 A ,B | 26-02-2003 |
| | | IT MI20011133 A1 | 29-11-2002 |
| | | IT MI20011134 A1 | 29-11-2002 |
| | | IT MI20011135 A1 | 29-11-2002 |
| | | JP 2003535172 T | 25-11-2003 |
| | | JP 2003535205 T | 25-11-2003 |
| | | JP 2003535206 T | 25-11-2003 |
| | | NL 1018186 C2 | 06-08-2002 |
| | | NL 1018186 A1 | 03-12-2001 |
| | | NL 1018187 C2 | 28-12-2001 |
| | | NL 1018187 A1 | 03-12-2001 |
| | | NL 1018188 C2 | 06-08-2002 |
| | | NL 1018188 A1 | 03-12-2001 |
| | | TW 539711 B | 01-07-2003 |
| | | US 2003199618 A1 | 23-10-2003 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 04 07 5482

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2004

| Patent document cited in search report | Publication date | Patent family member(s) | Publication date |
|---|---|---|---|
| US 2003197151 A1 | | US 2003191239 A1 | 09-10-2003 |
| US 2003189192 A1 | 09-10-2003 | IT MI20000626 A1 | 24-09-2001 |
| | | CA 2403923 A1 | 27-09-2001 |
| | | DE 1268633 T1 | 26-06-2003 |
| | | EP 1268633 A1 | 02-01-2003 |
| | | WO 0170868 A1 | 27-09-2001 |
| US 5854305 A | 29-12-1998 | DE 19531649 A1 | 06-03-1997 |
| | | AT 190993 T | 15-04-2000 |
| | | CN 1148075 A ,C | 23-04-1997 |
| | | DE 59604743 D1 | 27-04-2000 |
| | | EP 0761792 A2 | 12-03-1997 |
| | | JP 9143380 A | 03-06-1997 |

EPO FORM P0459

For more details about this annex : see Official Journal of the European Patent Office, No. 12/82